# EUROPEAN PATENT SPECIFICATION

(11) **EP 2 666 250 B1**
(45) Date of publication and mention of the grant of the patent: **26.04.2017**
(21) Application number: 11810607.9
(22) Date of filing: 27.12.2011
(51) Int. Cl.: H04L 12/24, H04B 10/032, H04Q 11/00, H04J 14/02

(54) **PROCEDURE AND SYSTEM FOR OPTICAL NETWORK SURVIVAL AGAINST MULTIPLE FAILURES**
VERFAHREN UND SYSTEM FÜR DAS ÜBERLEBEN EINES OPTISCHEN NETZWERKES BEI MEHRFACHEN AUSFÄLLEN
PROCÉDURE ET SYSTÈME DE SURVIE DE RÉSEAU OPTIQUE À DE MULTIPLES DÉFAILLANCES

(30) Priority: 20.01.2011 ES 201130064
(43) Date of publication of application: 27.11.2013
(73) Proprietor: Telefónica, S.A., 28013 Madrid (ES)
(72) Inventor: GONZÁLEZ DE DIOS, Oscar, E-28013 Madrid (ES)
(74) Representative: Carlos Hernando, Borja
(86) International application number: PCT/EP2011/074090
(87) International publication number: WO 2012/097946

(56) References cited:
- EP-A1- 1 793 530
- US-A1- 2003 229 807
- US-A1- 2004 208 547

## Description

### Field of the art

The present invention generally relates, in a first aspect, to a procedure for optical network survival against multiple failures, and more particularly to a procedure that allows an optical network to quickly react in case of working paths failures by pre-calculating a set of recovery paths for each working path linking an origin node with a destination node, with backward reserve of resources.

In a second aspect, the invention generally relates to a system for optical network survival against multiple failures, and more particularly to a system arranged for pre-calculating a set of recovery paths for each working path and simultaneously using them to recover a working path failure.

### Prior State of the Art

Currently, optical transport networks are the solution for moving huge volumes of data from one point to another in geographically different locations. An optical transport network is made of photonic switches interconnected by fibre links. It is not uncommon a failure in the fibre links or the nodes. The source of the failures is related to failure of equipment in the link (e.g. amplifiers), cuts in the fibres, e.g. by roadworks, digging, power failure or bad weather. In order to estimate the amount of failures in the network, it can be seen at the FCC reports, which published findings that long haul networks experience annually 3 cuts for 1500 kms of fibre [Grover03]. That implies a cut every four days in a typical long haul network with 45000 km of fibre. Thus, it is necessary to provide the network means of maintaining the service continuity in the presence of failures. Not only should the network be able to react to a single failure, but also to a multiple failure situation in which several link or nodes are affected simultaneously (or one after the other). A double failure can lead to service disconnection. It is not uncommon to reach a situation in which before a failure is repaired, another fault happens in the network. Also, catastrophic situations, like those provoked by bad weather or power outages, affect multiple geographically close locations.

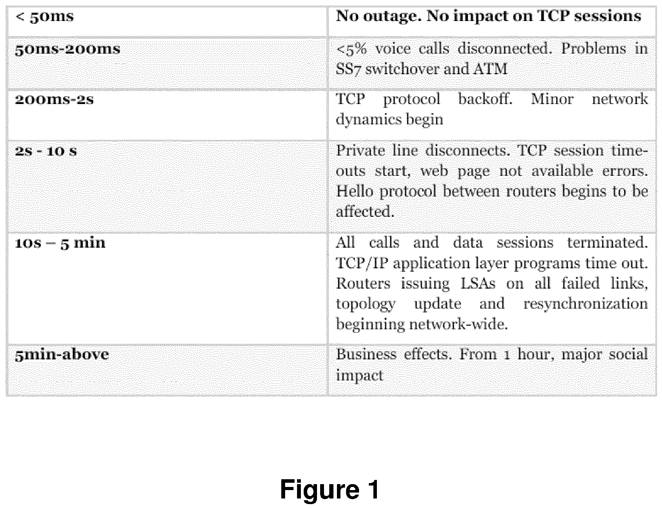

Summing up, as optical networks transport huge volumes of data, a quick recovery time is critical to avoid the loss of Tbs of data. The impact of network unavailability is studied in [Grover03] and is summarized in Figure 1. The network dynamics begins to be lightly affected between 50ms and 200ms, and between 200ms and 2s, the dynamics start to become affected more seriously. Above 2s, business starts to be affected, which can cause millions of euros of losses per hour. Thus, a fast recovery is of extreme importance in a transport network.

Currently, the solution for providing survivability in optical transport networks is based on GMPLS [RFC3471], an evolutionary advance of MPLS that supports packet switching, time division and wavelength multiplexing. GMPLS is the basis of an optical transport network control plane. The functional specification of the GMPLS recovery is described in [RFC 4426]. For the rest of the present description, the terminology for Recovery (Protection and Restoration) for GMPLS specified in [RCF 4427] will be used.

GMPLS defines different ways of achieving survivability. In an optical transport network, end to end data connections are known as LSP (label switched path). According to [RFC 4426], a (LSP) may be subject to local (span), segment and end-to-end recovery. Local span refers to the protection of the link between two neighbour switches. Segment protection refers to the recovery of a segment between two nodes. Finally, end-to-end protection refers to the protection of an entire LSP from the ingress to the egress node.

According to [RFC4427], protection and restoration of switched LSPs under tight time constraints is a challenging problem. This is particularly relevant to optical networks that consist of Time Division Multiplex (TDM) and/or all-optical (photonic) cross-connects referred to as GMPLS nodes (or simply nodes, or even sometimes "Label Switching Routers, or LSRs") connected in a general topology [RFC3945].

For the rest of the present description, the working LSP will be referred as the LSP to transport normal user traffic, and recovery LSP as the LSP to transport normal user traffic when the working LSP fails.

GMPLS [RFC4426] and ITU-T [G.801] define several schemes of survivability, grouped in protection and restoration schemes, which are next summarized, together with combined schemes.

### - Protection schemes:

### a) 1+1 Dedicated Protection

This scheme is based on the pre-establishment of a dedicated resource-disjoint protection recovery LSP (Label Switched Path) associated with the working LSP. Traffic is divided and simultaneously sent on both paths but when a failure is detected then all the information is sent through the path that is not affected by the failure.

### b) 1:1 Protection with extra traffic

This scheme is similar to 1 +1, but allows transporting extra traffic in the recovery LSP. This extra traffic will be preempted in case of failure.

### c) 1:n protection

A recovery LSP is set to protect N working LSPs. In the event that 2 or more LSPs fail, only one of them can use the recovery LSP.

### d) m:n protection

m recovery LSPs are set to protect n working LSPs. If more than m LSPs fail, some of the working LSPs cannot be recovered.

### e) SMP (Shared Meshed Protection)

According to SMP, each working connection is protected by a pre-configured protection path. The protection path can share some resources with other protection paths. The resources are reserved for the protection, but the recovery paths are not established. After the failure notification and location, the protection path is fully established.

The main difference with the previous schemes is that parts of the recovery LSP are shared with other recovery LSPs (not the whole recovery path).

### - Restoration schemes:

### a) Pre-Planned LSP Restoration

Before the failure detection and notification, one or more restoration LSPs are pre-computed and signalled between the same ingress-egress node pair as the working LSP, but not established (cross-connected). After the notification of the failure and its location, one recovery LSP is selected among those pre-calculated and is completely established.

### b) Shared-Mesh Restoration

"Shared-mesh" restoration is defined as a particular case of the pre-planned LSP restoration that reduces the restoration resource requirements by allowing multiple restoration LSPs (initiated from distinct ingress nodes) to share common resources (including links and nodes.).

This mechanism is very similar to the shared meshed protection (SMP) in the ITU-T. The main difference is that SMP reserves the resources, while in the shared meshed restoration there is no guarantee.

### c) LSP Restoration

After failure detection and notification, an alternate LSP is computed, signalled and fully established. The alternate LSP is signalled from the ingress node and may reuse the intermediate node's resources of the working LSP under failure condition (and may also include additional intermediate nodes.)

There are no specific recovery LSPs activated protecting the working LSP.

However, the working LSP can potentially be restored through any alternate available route, with or without any pre-computed restoration route. In this case the resources for the recovery LSP can be preallocated, but explicit signalling is needed to activate the recovery LSPs. The inventors refer to the latter as pre-computed restoration.

### -Combined schemes

Additionally, these schemes can be combined to obtain further levels of protection:

### 1+1 Protection + Restoration combined (PRC):

In this case, the path is protected by a dedicated LSP, and when either the working LSP or the protection LSP fail, they are restored.

[RFC 4872] defines the RSVP-TE Extensions needed to Support of End-to-End Genera (GMPLS) Recovery.

Survivability in Optical Transport Networks is also being standardized in the ITU-T SG-15. In this context. Shared Meshed Protection is currently being defined (G.SMP).

There are several patent documents that aim to solve the survivability in optical transport networks, some of which are next cited and briefly described.

US20050259570A1 - Fault recovery method for multi protocol label switching network, involves receiving fault event notification that indicates occurrence of fault after fault localization is performed, and performing alternative path calculation. The method involves receiving a fault event notification that indicates occurrence of a fault after fault localization is performed. A predetermined waiting time more than a time taken to receive state information notifications of links other than a link that is being utilized as an LSP is awaited. Alternative path calculation is performed based on the fault event notification and the state information notifications [Hitachi].

US20030084367A1 - Communication network e.g. mesh network, accommodates traffic path on fault recovery layer through specific transport path when one transport path is not working properly.

WO2008006268A1 - Method for realizing service protection in automatically switched optical network involves establishing connection according to recovery path establishment request, and switching service from work paths to recovery paths.

### [Huawei]

One of the main limitations of the different solutions is the need to locate the failure in the network. Locating the failure needs a Hello like protocol for the discovery and messages for the notification [Rozycki07]. The time to locate the failure depends on the transmission time from the closest node to the failure and the node origin of the affected LSPs and the processing time in the nodes. This time can vary in the range of hundreds of milliseconds, depending on the size of the network. Thus, avoiding this time can be the difference between no impact on the services and interruptions in the services.

To summarize, the main limitations of current solutions are:

### Protection schemes:

The 1+1, 1:1, 1:n and m:n protection are not able to survive in case of double/multiple failure. Moreover, in the cases with extra traffic, this traffic should be preempted in case of failures. Only the 1+1 mechanism guarantees the recovery of all the LSPs

On the other hand, protection schemes are the only ones to recover in less than 50ms.

### Restoration schemes:

### a) LSP Restoration

The first step in this scheme is to know the exact location of the failure. Thus, the network must have mechanisms to provide such information. The next step is the calculation of the recovery LSP, which cannot begin until the information of the location of the failure arrives at the node. The calculation of the recovery LSP includes, updating the topology, calculation of an alternative path, assignment of a new wavelength and check of all the physical restrictions of the path. Next the route must be signalled and perform all the cross-connections.

All these steps can take several seconds in wavelength switched optical networks. Moreover, there are no guarantees that the calculated route does not interfere with other calculated routes. In case there are collisions, recovery time increases significantly.

### b) Pre-Planned LSP Restoration / Shared meshed restoration

In order to alleviate the restoration time, a recovery path (or a set of recovery paths) can be computed in advance. Also, as noted by RFC4426, in cased of multiple failures, the shared mesh restoration capacity can be claimed for more than one failed LSP and the recovery LSP can be activated for one of them at most.

This kind of schemes are the most adequate to recover in case of multiple failure. However, currently the mechanisms need the notification of the fault to start the recovery process. Although multiple recovery paths can be pre-computed, only one of them can be selected and signalled. Thus, if the selected recovery LSP fails, e.g. because it uses the same shared resources as other LSP, it will have to try again, enlarging the recovery time.

In the best case, a successful pre-planned Restoration will be in the order of hundreds of milliseconds. Thus, HELLO problems between the routers may appear and TCP sessions start to fail. When several LSP restorations collide, the restoration time can go up to several seconds, increasing the problems.

### 1+1 Protection + Restoration combined (PRC):

This mechanism can survive to a double failure in the same sense as the restoration. As long as the working and recovery LSPs are set, the mechanism is fast.

However, resources consumption is very high and knowledge of the location of the failure is again needed to survive against multiple failures.

Two transmitters are needed simultaneously, and if the second failure happens before the working LSP has been re-established, a restoration is needed, taking a long time, and with no guarantee.

The method described in US20050259570A1 [Hitachi] begins with a notification of the location of the failure.

The method described in US20030084367A1 [NEC] does not need to know the location of the failure, so the recovery is speeded. However, it is aimed at the recovery of single failures. In the presence of multiple failures, it needs complementary mechanisms.

WO2008006268A1 [Huawei] proposal speeds the recovery in automatically switched optical networks. However, it is mainly aimed at the recovery of a single failure.

Other patent documents disclosing mechanisms for the recovery of a single failure are: US20070242605 A1, US20030043427A1 and US20040109687A1, the latter requiring locating the failure.

"Multiple link failure recovery in survivable optical networks", Xiaofei Cheng, Xu Shao and Yixin Wang, of Photonic Network Communications, Volume 14, Number 2, 159-164, DOI: 10.1007/s11107-007-0071-4, discloses a method for recovery of a multiple failure link, but is focused in the reserve of a backup bandwidth, which increases the resources consumption.

Summarizing, none of the current solutions is able to respond quickly to a multiple failure with a low use of resources and guarantees. Most of the solutions need be notified first of the exact location of the failure.

Although restoration is able to respond to multiple failures, it takes in average several seconds to recover, which are significantly increased in case of collisions.

Fast recovery of a single fault, in less than 50ms, is only possible with protection schemes, which double the network resources dedicated for survivability.

### Description of the Invention

It is necessary to offer an alternative to the state of the art which covers the gaps found therein, particularly those related to the lack of proposals providing a fast recovery for multiple failures.

To that end, the present invention provides, in a first aspect, a procedure for optical network survival against multiple failures, comprising using a pre-planned path restoration scheme for computing in advance, or pre-calculating, recovery paths for recovering failed working paths.

On contrary to the prior art proposals, the procedure of the first aspect of the invention, in a characteristic manner, in case of single or multiple failures have been produced in each of said working paths it comprises pre-calculating a set of recovery paths for each working path linking an origin node with a destination node, and simultaneously using the recovery paths of said set of recovery paths to try to communicate, said origin node with said destination node, by means of simultaneously sending different request recovery messages through said recovery paths, and selecting at said destination node, the recovery paths to be used depending on said different request recovery messages sent.

The present invention takes its basis on the pre-planned restoration schemes and improves them to react quickly in case of multiple failures avoiding the need to know the exact location of the failure. For some embodiments, the invention will be able to recover in less than 200ms in many cases, avoiding problems in the TCP sessions and communication between the routers.

For an embodiment, said paths of said set of recovery paths are three or more in number, such that at least one of the recovery paths is valid in case of a double link failure.

The procedure comprises, as per an embodiment, detecting a working LSP failure at said origin node, for example by means of loss of signal or loss of quality indications.

Other embodiments of the procedure of the first aspect of the invention are described in appended claims 5 to 13, and in a next section of the present description.

A second aspect of the invention concerns to a system for optical network survival against multiple failures, comprising:
- detection means for detecting a failure in a working path linking an origin node with a destination node;
- processing means for, following a restoration scheme, computing in advance, or pre-calculating, recovery paths for recovering failed working paths; and
- control means, connected to said detection means and said processing means, for building a recovery path upon the detection of a working path failure.

On contrary to conventional systems, in the system of the second aspect of the invention said processing means are arranged for pre-calculating a set of recovery paths for each working path, and said control means are arranged for simultaneously using the recovery paths of said set of recovery paths to try to establish communications between said origin node and said destination node, in case of at least a failure has been produced in each of said working path.

The system of the second aspect of the invention implements, for some embodiments, the method of the first aspect of the invention.

Other embodiments of the system of the second aspect of the invention are described in appended claims 15 to 20, and in a next section of the present description with reference to the attached drawings.

### Brief Description of the Drawings

The previous and other advantages and features will be more fully understood from the following detailed description of embodiments, with reference to the attached drawings (some of which have already been described in the Prior State of the Art section), which must be considered in an illustrative and non-limiting manner, in which:
Figure 1 is a table showing the impact of network unavailability.
Figure 2 shows the main modules of the system of the second aspect of the invention, for an embodiment.
Figure 3 shows the fields that make up a request recovery message used as part of the method of the first aspect of the invention, and sent form a source node to a destination node.
Figure 4 discloses the fields that make up a response recovery message of the method of the first aspect of the invention, sent by the destination node.
Figure 5 shows the messages sent after a double failure in a case where there are three different recovery paths, only one of the arriving at the destination node, for an embodiment of the method of the invention.
Figure 6 shows another embodiment of the method of the invention where there are four different recovery paths and two request recovery messages arrive at the destination node.
Figure 7 discloses that the Destination node receives the message and sends back the confirmation. During that way back the necessary resources are progressively reserved. Then, the Source node continues the transmission of the information through the path O-B-C-D.

### Detailed Description of Several Embodiments

The present invention, as for its first and second aspects, aims at a quick recovery of an optical network in case of a double/multiple failure keeping the use of resources low. It relays on the following concepts:
- Pre-calculation of a set of recovery paths for each demand in the network. This set of paths will cover multiple failure cases.
- Procedure for determining the paths to cover a multiple failure case.
- Detection of failure at the Source node. This detection can be done by loss of signal fail or signal/loss of quality indications.
- Simultaneous sending of recovery message through each of the backup paths.
- Selection of the backup path at the Destination node.
- Backward reservation of the backup path. The resources are established (i.e. the cross connections are made in the backwards reservation.

The main concept of the procedure is, firstly, the pre-calculation of a set of recovery paths (route + wavelength +optical parameters for the transponder) for each working path. The set of recovery paths is configurable, according to the desired level of protection. The present invention includes a mechanism to calculate all the paths for a double failure case, in such a way that at al least one of the paths is valid in case of a double link failure.

The invention relies on end-to-end LSP recovery. The failure has to be detected at the ingress node, either by means of loss of signal (LS) or Loss of quality (LQ) indications.

Once the failure is detected at the optical layer in the ingress node, simultaneous request recovery messages are sent to the egress node, each of them following the corresponding pre-calculated path. All request recovery messages have the same LSP identifier, a common failure id, and a different recovery LSP id per path. At the destination (egress node), depending on the embodiment, one or more request recovery messages will arrive. Only one of them will be chosen. The preferred option is to select the first request recovery message to arrive, ignoring the rest of request recovery messages with the same LSP id and failure id. When the intermediate nodes receive the request recovery messages, the resources are not reserved, only checked if they are available for the given LSP.

The set up of the backup path is made through the reverse path. Note only one response recovery message, or response to a request recovery message, is sent from the egress node, as the rest of request recovery messages are ignored. When the intermediate nodes receive the positive recovery response, i.e. the response recovery message, the resources are activated (e.g. the cross-connections are made).

With this mechanism the chances that a connection survives in case of double failure are enhanced. Furthermore, the mechanism does not need to wait to know where the failure has happened.

The invention also proposes an implementation of the recovery message based on extending the RSVP messages.

Thus, the invention is an enhancement of the pre-planned LSP restoration scheme to react fast in case of multiple failures. It is also suitable to be implemented in Shared meshed restoration schemes.

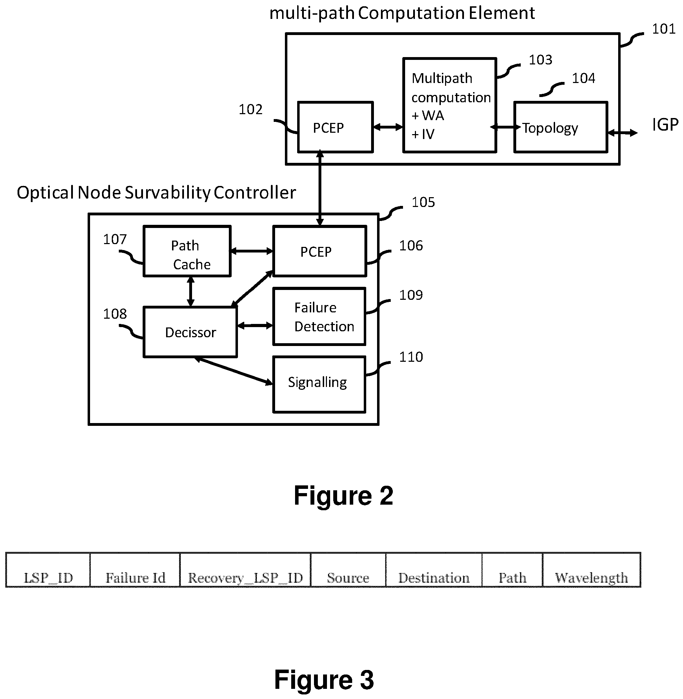

Next the main modules of the system of the second aspect of the invention are described, for the embodiment illustrated in Figure 2.

Element 101 is a Multi-path Computation element: This module is in charge of the computation of a set of recovery LSPs for a working LSP in the network. The set of paths computed by this element cover multiple fault cases. This module is composed of sub-modules 102, 103 and 104.

*Sub-module 102,* PCEP: This element is in charge of the communication with submodule 106 of the Optical Node Survivability Controller (element 105).

This sub-module receives requests with working LSP routes.

This sub-module answers with the set of possible recovery LSPs (path+wavelength)
A possible way, not excluding others, is to use the PCEP protocol defined in RFC 5440.

*Sub-module 103* is the multipath computation, wavelength assignment and impairment validation:
This element is in charge of computing the set of recovery LSPs for a working LSP in the network. The paths must cover all the fault cases of interest (single, double ...) It must calculate a wavelength for each recovery LSPs. It must validate the feasibility of the calculated path.

A possible, not excluding others, mechanism to perform the calculation of the paths is described next:
Mechanism to obtain pre-calculated paths to support multiple failures:
   First of all, it is advised that, in order to be able to achieve a 100% availability against failure of order n, all nodes need to be connected to at least n+1 other nodes. Otherwise, the node that is not connected with at least n+1 links is subject to be isolated in some failure of order-n case, making impossible to ensure 100% of availability.

The next described mechanism to calculate different paths that survive against a double failure is just one of several mechanisms which can be used for calculating the set of paths. Depending on the embodiment, all or only part of the calculated paths are used for recovery purposes. The number of recovery paths can be limited, reducing the availability.

The mechanism works as follows:
For each source destination pair in the network:
   STEP ONE
      Obtain the spanning tree from egress node (destination) to ingress node (source).
   STEP TWO
      Identify the working path in the obtained tree. Number from 1 to n all the potential failure elements in the working path.
   STEP THREE
      Set F=1. F is the number of the failure element (defined in step two).
   STEP FOUR
      Select potential failure element F of the working LSP (links or nodes). Exclude from the tree the nodes/links in the tree behind the failed element. Choose the shortest path in the remaining tree. Save the solution as one of the recovery LSPs and go to step four.
   STEP FIVE
      Identify the last obtained recovery LSP. Select one of the potential failure elements of the recovery LSP (links or nodes). Exclude from the tree the nodes /links in the tree behind the failed element. Choose the shortest path in the remaining tree. Save the solution as one of the recovery LSPs.

Repeat this step until all failure elements are chosen.

Then, increment F, clean the spanning tree and go to STEP four.

### Sub-module 104, topology:

This sub-module is in charge of listening to IGP protocols and maintains an update on the Traffic Engineering DataBase with the topology and use of the lambdas in the different interfaces.

Element 105, which is an Optical Node Survivability Controller, is a module is in charge of:
- Detection of failure at the Source node. This detection can be done by loss of signal fail or signal/loss of quality indications
- Simultaneous sending of recovery message through each of the backup paths.
- Selection of the backup path at the Destination node.
- Backward reservation of the backup path. The resources are established (i.e. the cross connections are made in the backwards reservation.

This module is composed of five sub-modules, particularly sub-modules 106,107,108,109 and 110, and is in charge of the end to end LSP recovery.

*Sub-module PCEP 106* is in charge of the communication with sub-module 102 of the multi-path computation element 101. Sub-module 106 receives requests for recovery paths for a working LSP from the Decissor sub-module 108. The sub-module 106 processes the answers from the multi-path computation element 101 and stores them in the path cache 107.

*Sub-module Path Cache 107* maintains, for each working LSPs starting in that node a set of recovery LSPs. Associated to each LSP the optical node should keep all the information need to quick set up of the lightpath (i.e. power balance). The set of paths can be updated at any time.

*Sub-module Core 108* is the intelligence of the node. Every time a working LSP is established, starting from its node, it requests a set of recovery paths to sub-module 106. Once the set of recovery paths are received, it calculates of the adjustments in the node needed to establish each of these LSPs and stores them in the Path Cache 107.

The origin node has or is associated to all of the above modules and sub-modules, while the destination node and each of the intermediate nodes has or is associated to respective core sub-modules 108, in order to process the request and response recovery messages received and check, reserve and/or activate the needed resources, as for the intermediate nodes is concerned, and for receiving the request recovery message and to generate and send the corresponding response recovery message, as for the destination node is concerned.

In the event of a fail in the working LSP starting in the node (due to any kind of failure, single or multiple), which will be notified by element 109 (fault detection), one request recovery message is created for each recovery path available. This message is sent to the signalling module (110), which will forward it for all the control plane interfaces.

As shown in Figure 3, the request recovery message contains the following fields:
- LSP ID: Identifies the LSP (i.e. the lightpath in a WSON).
- Failure Id: This field carries the timestamp when the failure happened. It is aimed to distinguish between different failure cases.
- Recovery_LSP_ID: This field identifies the different recovery LSPs calculated. It is different for each of the recovery LSPs of the same working LSP.
- Source: This field indicates the ingress optical node of the connection.
- Destination: This field indicates the egress optical node of the connection.
- Path: This includes the list of links/nodes of the recovery path.
- Wavelength: Number of wavelength assigned for the path.

A request recovery message with different Recovery_LSP_ID is sent for each recovery LSP. Thus, n simultaneous messages are sent from the Source node, where n is the number of pre-calculated paths for each LSP. Each of the request recovery messages will follow its recovery path.

When a core sub-module 108 of a node receives a request recovery message and the final destination of the LSP is not that node, i.e. it is a intermediate node, it checks if resources are available for such path, and if the route of the recovery LSP is possible (it may not be possible if it uses a link which has failed). Note that in this point, the resources are not reserved, only checked if they are available for the given LSP.

The set up of the backup path is made through the reverse path. When core module 108 receives a response recovery message, it reserves the resources in the optical node. Note only one recovery response is sent from the egress node, as the rest are ignored. When the intermediate nodes receive the positive recovery response, the resources are activated (e.g. the cross-connections are made).

With this mechanism the chances that a connection survives in case of double failure are enhanced. Furthermore, the mechanism does not need to wait to know where the failure has happened.

When core module 108 receives a recovery message whose destination is its optical node, i.e. it is the destination node, if it is the first recovery message for that LSP and failure case that has arrived there at, said core module 108 of said destination node responds to the message if there are available resources. To this end, a list of LSP_ID, Failureld and Recovery_LSP_ID is maintained. If the incoming recovery message has the LSP_ID and Failureld that is in the list, the message is discarded.

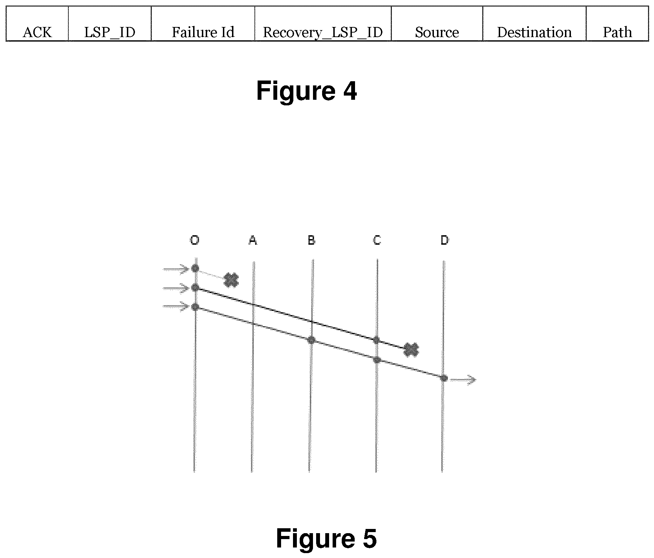

A Response recovery message used to confirm to the Source node that the Request recovery message arrived and the corresponding path is available. This message is composed by the next fields, as shown in Figure 4:
- ACK: This field indicates if the reservation of the resources has been positive or negative.
- LSP ID: Identifies the LSP (i.e. the lightpath in a WSON).
- Failure Id: This field carries the timestamp when the failure happened. It is aimed to distinguish between different failure cases.
- Recovery_LSP_ID: This field identifies the different recovery LSPs calculated. It is different for each of the recovery LSPs of the same working LSP.
- Source: This field indicates the ingress optical node of the connection.
- Destination: This field indicates the egress optical node of the connection.
- Path: This includes the list of links/nodes of the recovery path.

*Sub-module 110,* Signalling, is in charge of constructing the Request and response recovery message and sending them to the network. A possible, not excluding others, way of constructing these messages is by extending the RSVP protocol.

Next different embodiments of the procedure of the first aspect of the invention, and of use of the system of the second aspect of the invention, are described with reference to Figures 5 to 7.

Figure 5 shows the request recovery messages sent after a double failure in a case where there are three different recovery paths. The recovery messages are sent simultaneously. The first and second messages do not progress as they encounter one of the failed resources in their paths. The third message has a good path, and arrives at the destination.

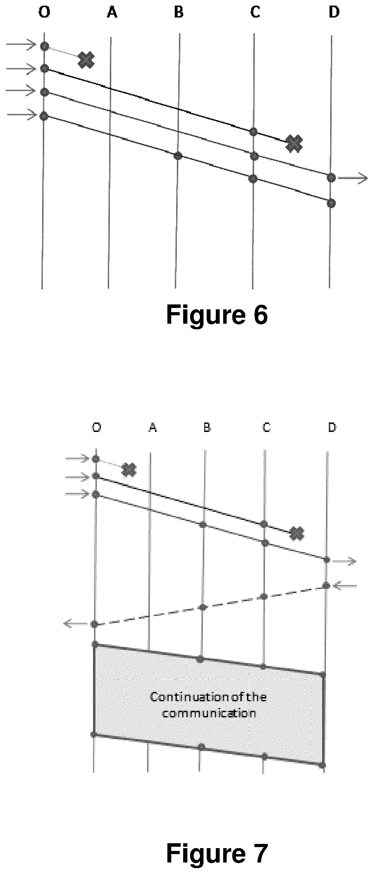

The other possible case is when there are more recovery paths arriving to the destination. As shown in figure 6, a failure occurs in links O-A and C-D, so the Source node generates four request recovery messages and sends them through the four established recovery paths. The important aspect to see in this case is that there are two paths that are not affected by the failure and therefore two request recovery messages will arrive to the Destination node. Node D will take the message that arrives first, that corresponds to the shortest path (O-C-D path in Figure 6), and it will discard all messages that arrive lately.

Destination node receives a message through at least one path that is available after a failure. So, when the Destination node receives a message, it analyses the Path field of the Request recovery message in order to know the sequence of nodes, that is, the path that is available. The D node then generates the Response recovery message with the same information that was included in the Request recovery message and sends it back through the path determined in the Path field.

In case the Destination node receives more than one Request recovery message it will accept the message that arrives in first place that corresponds with the shortest path, and will discard later messages. The advantage of accepting the first message is that it corresponds to the path with less time delay.

In the transmission time of the Response recovery message, one of the important stages of the invention takes place. The stage referred is "the backward reservation of the resources needed for the transmission". This is possible because the response recovery messages include all the information, that is, the node sequence and thus the link sequence, and the wavelength (it is considered a network without wavelength conversion so the wavelength assigned to a path is the same for all the links of the path).

After a given time the Source node receives the Response recovery message. The O node analyses the Path field of the Response recovery message in order to know the available path and begins again to send the information that was already been transmitted before the double failure, through the new established path, as is shown in Figure 7, for the same embodiment of Figure 5, where the indicated as "Continuation of the communication" is performed through the O-B-C-D path through which the only one request recovery message arrived at the destination node.

### Advantages of the Invention:

Current mechanisms for the survivability of an optical network either take several seconds or are very fast (less than 50ms) but use a high number of resources and dot handle multiple failures.

This invention provides the following features:
Perform a Fast recovery (less than one second) of an end to end optical path in case of a double failure in the network.
Perform a Fast recovery (less than one second) of an end to end optical path in case of a catastrophic multiple failure in the network.
Recover from a multiple failure without having to know of the exact location of the failure.
Low use of network resources (no need to dedicate transponders and wavelengths) to guarantee the survival against double failure.

A person skilled in the art could introduce changes and modifications in the embodiments described without departing from the scope of the invention as it is defined in the attached claims.

### ACRONYMS

- GMPLS: Generalized Multi-Protocol Label Switching
- LSP: Label Switched Path
- LSR: Label Switching Router
- PCEP: Path Computation Element Protocol
- RSVP: Resource ReSerVation Protocol
- TCP: Transmission Control Protocol
- TDM: Time Division Mulitiplexing
- WSON: Wavelegth Switched Optical Networks

### REFERENCES

[G.808.1] Recommendation G.808.1: Generic protection switching - Linear trail and subnetwork protection.
[Grover03] D. Grover "Mesh-based Survivable Transport Networks: Options and Strategies for Optical, MPLS, SONET and ATM Networking". Prentice Hall 2003.
[Hitachi] US20050259570A1 - "Fault recovery method for multi protocol label switching network, involves receiving fault event notification that indicates occurrence of fault after fault localization is performed, and performing alternative path calculation".
[Huawei] EP2028774B1 - "Method system and node device for realizing service protection in the automatically switched optical network".
[NEC] US20030084367A1 "Fault recovery system and method for a communications network".
[RFC3471] Generalized Multi-Protocol Label Switching (GMPLS) Signalling Functional Description
[RFC 4426] GMPLS Recovery Functional Specification.
[RCF 4427]. Recovery (Protection and Restoration) Terminology for Generalized Multi-Protocol Label Switching (GMPLS).
[RFC 4872] RSVP-TE Extensions in Support of End-to-End Generalized Multi-Protocol Label Switching (GMPLS) Recovery.
[RFC 3272] "Overview and Principles of Internet Traffic Engineering".
[Rociki07] "Failure Detection and Notification in GMPLS Control Plane", Workshop on GMPLS Performance: Control Plane Resilience, 2007.

## Claims

1. Procedure for optical network survival against multiple failures, comprising using a pre-planned path restoration scheme for computing in advance, or pre-calculating, recovery paths for recovering failed working paths, **characterised in that** in case of single or multiple failures have been produced in each of said working paths it comprises:
pre-calculating a set of recovery paths for each working path linking an origin node (O) with a destination node (D),
simultaneously using the recovery paths of said set of recovery paths to try to communicate, said origin node (O) with said destination node (D), by means of simultaneously sending different request recovery messages through said recovery paths; and
selecting at said destination node (D), the recovery paths to be used depending on said different request recovery messages sent.

2. Procedure as per claim 1, wherein said paths of said set of recovery paths are at least three in number, such that at least one of the recovery paths is valid in case of a double link failure.

3. Procedure as per any of the previous claims, comprising detecting a working Label Switched Path, or LSP, failure at said origin node (O).

4. Procedure as per claim 3, wherein said failure detection is performed by means of loss of signal or loss of quality indications.

5. Procedure as per any of the previous claims, wherein the pre-calculation of each of said recovery paths takes into account route, wavelength and optical parameters for the transponder, for each working path.

6. Procedure as per any of the previous claims, wherein the number of recovery paths of said set of recovery paths is configurable, such as the number of recovery paths is configured according to the desired level of protection, wherein the higher the number of recovery paths, the higher the level of protection.

7. Procedure as as per any of the previous claims, wherein said request recovery messages differ from each other by including different recovery path identifiers, and include respective path fields indicating the route embraced by the respective recovery path.

8. Procedure as per claim 6 or 7, comprising receiving, said destination node (D), at least one of said request recovery messages, and answering by sending back, to the origin node (O), a response recovery message through the route indicated in the path field of the received request recovery message.

9. Procedure as per claim 8, comprising receiving, said destination node (D), at least two of said request recovery messages, and answering by sending back, to the origin node (O), a response recovery message through the route indicated in the path field of a selected one of the at least two received request recovery messages.

10. Procedure as per claim 9, comprising selecting from said at least two received request recovery messages, by said destination node (D), the one which has arrived first.

11. Procedure as per claim 8, 9 or 10, comprising reserving resources, needed for the transmission through the recovery path through which the response recovery message is circulating, said resources reservation being done in a backwards sequence through the nodes included in the route of said recovery path up to the origin node (O), by using the information included in the response recovery message.

12. Procedure as per claim 11, comprising receiving, by said origin node (O), said response recovery message, and establishing as working path the recovery path whose route is indicated in the path field of the response recovery message.

13. Procedure as per any of the previous claims, wherein said paths are Label Switched Paths, or LSPs.

14. System for optical network survival against multiple failures, comprising:
- detection means for detecting a failure in a working path linking an origin node with a destination node;
- processing means for, following a restoration scheme, computing in advance, or pre-calculating, recovery paths for recovering failed working paths;
- control means, connected to said detection means and said processing means, for building a recovery path upon the detection of a working path failure;
wherein said system is **characterised in that** said processing means are arranged for pre-calculating a set of recovery paths for each working path, and **in that** said control means are arranged for simultaneously using the recovery paths of said set of recovery paths to try to establish communications between said origin node and said destination node, in case of at least a failure has been produced in each of said working path.

15. System as per claim 14, wherein said processing means are included in a multipath computation module (101) and said detection and control means are included in an optical node survivability controller module (105), said modules being bidirectionally communicated there between through corresponding communication sub-modules (102, 106), and being included or associated to said origin node.

16. System as per claim 15, wherein said control means are intended for requesting to said processing means, through said communication sub-modules (102, 106), recovery paths for a working path, said processing means being intended for sending, also through said communication sub-modules (102, 106), said set of recovery paths to the control means upon receiving said request.

17. System as per claim 16, wherein said optical node survivability controller module (105) comprises a recovery path memory sub-module (107), communicated with said communications sub-module (106) for at least receiving and storing said set of recovery paths, and with said control means for at least receiving and storing adjustment data calculated by the latter with respect of each of the recovery paths, in order to build them.

18. System as per claim 17, wherein said optical node survivability controller module (105) also comprises a signalling sub-module (110) communicated with the control means for sending through the recovery paths corresponding request recovery messages to the destination node and for receiving at least one response recovery message there from.

19. System as per claim 18, comprising second processing means included or associated to said destination node for processing the request recovery messages received and sending back said response recovery message towards the origin node through one of said recovery paths.

20. System as per claim 19, wherein it implements the method as per any of claims 1 to 13.

## Patentansprüche

1. Verfahren für das Überleben eines optischen Netzwerkes bei mehrfachen Ausfällen, welches das Benutzen eines vorgeplanten Pfadwiederaufbauschemas zum Errechnen im Voraus oder Vorberechnen von Wiederherstellungspfaden zum Wiederherstellen von fehlgeschlagenen Arbeitspfaden umfasst, **dadurch gekennzeichnet, dass** es, in dem Fall, dass sich ein einziger oder mehrfache Ausfälle in jedem der Arbeitspfade ereignet hat, Folgendes umfasst:
Vorberechnen eines Satzes von Wiederherstellungspfaden für jeden Arbeitspfad, welcher einen Ursprungsknoten (O) mit einem Zielknoten (D) verbindet,
gleichzeitiges Benutzen der Wiederherstellungspfade des Satzes von Wiederherstellungspfaden, um die Kommunikation des Ursprungsknotens (O) mit dem Zielknoten (D) durch gleichzeitiges Senden von verschiedenen Anforderungs-Wiederherstellungsnachrichten durch die Wiederherstellungspfade zu versuchen; und
Auswählen der zu benutzenden Wiederherstellungspfade abhängig von den verschiedenen gesendeten Anforderungs-Wiederherstellungsnachrichten an dem Zielknoten (D).

2. Verfahren nach Anspruch 1, wobei die Pfade des Satzes von Wiederherstellungspfaden mindestens drei an der Zahl sind, sodass mindestens einer der Wiederherstellungspfade in dem Fall eines doppelten Verbindungsausfalls gültig ist.

3. Verfahren nach einem der vorhergehenden Ansprüche, welches das Erkennen eines Ausfalls eines arbeitenden Label-Switched-Path oder LSP an dem Ursprungsknoten (O) umfasst.

4. Verfahren nach Anspruch 3, wobei das Erkennen des Ausfalls durch Anzeichen von Signalverlust oder Qualitätsverlust durchgeführt wird.

5. Verfahren nach einem der vorhergehenden Ansprüche, wobei das Vorberechnen jedes der Wiederherstellungspfade für jeden Arbeitspfad die Route, die Wellenlänge und optische Parameter für den Transponder berücksichtigt.

6. Verfahren nach einem der vorhergehenden Ansprüche, wobei die Anzahl von Wiederherstellungspfaden des Satzes von Wiederherstellungspfaden gestaltbar ist, so wie die Anzahl von Wiederherstellungspfaden gemäß dem erwünschten Schutzniveau gestaltet ist, wobei je höher die Anzahl von Wiederherstellungspfaden, desto höher das Schutzniveau ist.

7. Verfahren nach einem der vorhergehenden Ansprüche, wobei sich die Anforderungs-Wiederherstellungsnachrichten voneinander unterscheiden, indem sie verschiedene Wiederherstellungspfadkennungen enthalten und jeweilige Pfadfelder enthalten, welche die von dem jeweiligen Wiederherstellungspfad angenommene Route angeben.

8. Verfahren nach Anspruch 6 oder 7, welches das Empfangen von mindestens einer der Anforderungs-Wiederherstellungsnachrichten durch den Zielknoten (D) und das Antworten durch Zurücksenden einer Antwort-Wiederherstellungsnachricht an den Ursprungsknoten (O) durch die in dem Pfadfeld der empfangenen Anforderungs-Wiederherstellungsnachricht angegebene Route umfasst.

9. Verfahren nach Anspruch 8, welches das Empfangen von mindestens zwei der Anforderungs-Wiederherstellungsnachrichten durch den Zielknoten (D) und das Antworten durch Zurücksenden einer Antwort-Wiederherstellungsnachricht an den Ursprungsknoten (O) durch die in dem Pfadfeld von einer ausgewählten der mindestens zwei empfangenen Anforderungs-Wiederherstellungsnachrichten angegebene Route umfasst.

10. Verfahren nach Anspruch 9, welches das Auswählen derjenigen von den mindestens zwei empfangenen Anforderungs-Wiederherstellungsnachrichten, die zuerst angekommen ist, durch den Zielknoten (D) umfasst.

11. Verfahren nach Anspruch 8, 9 oder 10, welches das Reservieren von Ressourcen umfasst, welche für die Übertragung durch den Wiederherstellungspfad, durch welchen die Antwort-Wiederherstellungsnachricht läuft, benötigt werden, wobei das Reservieren von Ressourcen in einer rückwärts gerichteten Reihenfolge durch die Knoten, die in der Route des Wiederherstellungspfads enthalten sind, bis hin zu dem Ursprungsknoten (O) unter Verwendung der Informationen, die in der Antwort-Wiederherstellungsnachricht enthalten sind, durchgeführt wird.

12. Verfahren nach Anspruch 11, welches das Empfangen der Antwort-Wiederherstellungsnachricht durch den Ursprungsknoten (O) umfasst und als Arbeitspfad den Wiederherstellungspfad, dessen Route in dem Pfadfeld der Antwort-Wiederherstellungsnachricht angegeben ist, festlegt.

13. Verfahren nach einem der vorhergehenden Ansprüche, wobei die Pfade Label Switched Paths oder LSP sind.

14. System für das Überleben eines optischen Netzwerkes bei mehrfachen Ausfällen, welches Folgendes umfasst:
- Erkennungsmittel zum Erkennen eines Ausfalls in einem Arbeitspfad, welcher einen Ursprungsknoten mit einem Zielknoten verbindet;
- Verarbeitungsmittel zum Errechnen im Voraus oder Vorberechnen gemäß einem Wiederaufbauschema von Wiederherstellungspfaden zum Wiederherstellen von fehlgeschlagenen Arbeitspfaden;
- Steuermittel, welche mit den Erkennungsmitteln und den Verarbeitungsmitteln verbunden sind, um einen Wiederherstellungspfad nach dem Erkennen eines Arbeitspfadausfalls zu bilden;
wobei das System **dadurch gekennzeichnet ist, dass** die Verarbeitungsmittel zum Vorberrechnen eines Satzes von Wiederherstellungspfaden für jeden Arbeitspfad angeordnet sind, und dadurch, dass die Steuermittel zum gleichzeitigen Benutzen der Wiederherstellungspfade des Satzes von Wiederherstellungspfaden angeordnet sind, um das Herstellen von Verbindungen zwischen dem Ursprungsknoten und dem Zielknoten in dem Fall, dass sich mindestens ein Ausfall der Arbeitspfade ereignet hat, zu versuchen.

15. System nach Anspruch 14, wobei die Verarbeitungsmittel in einem Mehrpfad-Berechnungsmodul (101) enthalten sind und die Erkennungs- und Steuermittel in einem Steuermodul zur Überlebensfähigkeit des optischen Knotens (105) enthalten sind, wobei die Module miteinander durch entsprechende Kommunikationsuntermodule (102, 106) bidirektional kommunizieren und in dem Ursprungsknoten enthalten oder mit dem Ursprungsknoten verbunden sind.

16. Verfahren nach Anspruch 15, wobei die Steuermittel zum Anfordern von Wiederherstellungspfaden für einen Arbeitspfad an die Steuermittel durch die Kommunikationsuntermodule (102, 106) vorgesehen sind, wobei die Verarbeitungsmittel zum Senden des Satzes von Wiederherstellungspfaden an die Steuermittel nach dem Empfangen der Anforderung, auch durch die Kommunikationsuntermodule (102, 106), vorgesehen sind.

17. System nach Anspruch 16, wobei das Steuermodul zur Überlebensfähigkeit des optischen Knotens (105) ein Speicheruntermodul des Wiederherstellungspfads (107) umfasst, welches mit dem Kommunikationsuntermodul (106) mindestens zum Empfangen und Speichern des Satzes von Wiederherstellungspfaden und mit den Steuermitteln mindestens zum Empfangen und Speichern der Anpassungsdaten, die von letzteren in Bezug auf jeden der Wiederherstellungspfade berechnet wurden, kommuniziert, um sie zu bilden.

18. System nach Anspruch 17, wobei das Steuermodul zur Überlebensfähigkeit des optischen Knotens (105) auch ein Signalisierungsuntermodul (110) umfasst, welches mit den Steuermitteln zum Senden von entsprechenden Anforderungs-Wiederherstellungsnachrichten an den Zielknoten durch die Wiederherstellungspfade und zum Empfangen mindestens einer Antwort-Wiederherstellungsnachricht daraus kommuniziert.

19. System nach Anspruch 18, welches zweite Verarbeitungsmittel umfasst, die in dem Zielknoten enthalten oder mit dem Zielknoten verbunden sind, um die empfangenen Anforderungs-Wiederherstellungsnachrichten zu verarbeiten und die Antwort-Wiederherstellungsnachricht zu dem Ursprungsknoten durch einen der Wiederherstellungspfade zurückzusenden.

20. System nach Anspruch 19, wobei es das Verfahren nach einem der Ansprüche 1 bis 13 implementiert.

## Revendications

1. Procédure pour la survie d'un réseau optique face à des défaillances multiples, comprenant l'utilisation d'un schéma de restauration de chemin préplanifié pour la computation en avance, ou le précalcul, des chemins de récupération pour récupérer des chemins de travail défaillants, **caractérisée en ce que** dans le cas où des défaillances seules ou multiples se sont produites dans chacun desdits chemins de travail elle comprend :
le précalcul d'un ensemble de chemins de récupération pour chaque chemin de travail reliant un noeud d'origine (O) à un noeud de destination (D),
l'utilisation simultanée des chemins de récupération dudit ensemble de chemins de récupération pour tenter de mettre en communication, ledit noeud d'origine (O) avec ledit noeud de destination (D), au moyen de l'envoi simultané de différents messages de récupération de requête à travers lesdits chemins de récupération ; et
le choix dans ledit noeud de destination (D), des chemins de récupération à utiliser en fonction desdits différents messages de récupération de requête envoyés.

2. Procédure selon la revendication 1, dans laquelle lesdits chemins dudit ensemble de chemins de récupération sont au moins au nombre de trois, de sorte qu'au moins l'un des chemins de récupération est valide en cas d'une double défaillance de lien.

3. Procédure selon l'une quelconque des revendications précédentes, comprenant la détection d'une défaillance de chemin de commutation d'étiquette de travail, ou LSP, audit noeud d'origine (O).

4. Procédure selon la revendication 3, dans laquelle ladite détection de défaillance est réalisée au moyen de la perte de signal ou perte d'indications de qualité.

5. Procédure selon l'une quelconque des revendications précédentes, dans laquelle le précalcul de chacun desdits chemins de récupération prend en compte la route, la longueur d'onde et les paramètres optiques pour le transpondeur, pour chaque chemin de travail.

6. Procédure selon l'une quelconque des revendications précédentes, dans laquelle le nombre de chemins de récupération dudit ensemble de chemins de récupération est configurable, de sorte que le nombre de chemins de récupération est configuré selon le niveau voulu de protection, dans laquelle plus le nombre de chemins de récupération est élevé, plus le niveau de protection est élevé.

7. Procédure selon l'une quelconque des revendications précédentes, dans laquelle lesdits messages de récupération de requête diffèrent les uns des autres en incluant différents identifiants de chemin de récupération, et incluent des champs de chemins respectifs indiquant la route pratiquée par le chemin de récupération respectif.

8. Procédure selon la revendication 6 ou 7, comprenant la réception, ledit noeud de destination (D), d'au moins l'un desdits messages de récupération de requête, et la réponse en renvoyant, au noeud d'origine (O), un message de récupération de réponse à travers la route indiquée dans le champ de chemin du message de récupération de requête reçu.

9. Procédure selon la revendication 8, comprenant la réception, ledit noeud de destination (D), d'au moins deux desdits messages de récupération de requête, et la réponse en renvoyant, au noeud d'origine (O), un message de récupération de réponse à travers la route indiquée dans le champ de chemins de celui choisi parmi au moins les deux messages de récupération de requête reçus.

10. Procédure selon la revendication 9, comprenant le choix parmi lesdits au moins deux messages de récupération de requête reçus, par ledit noeud de destination (D), de celui qui est arrivé le premier.

11. Procédure selon la revendication 8, 9 ou 10, comprenant des ressources de réserves, nécessaires pour la transmission à travers le chemin de récupération à travers lequel circule le message de récupération de réponse, ladite réserve de ressources étant faite dans une séquence arrière à travers les noeuds inclus dans la route dudit chemin de récupération jusqu'au noeud d'origine (O), en utilisant les informations incluses dans le message de récupération de réponse.

12. Procédure selon la revendication 11, comprenant la réception, par ledit noeud d'origine (O), dudit message de récupération de réponse, et l'établissement comme chemin de travail du chemin de récupération dont la route est indiquée dans le champ de chemin du message de récupération de réponse.

13. Procédure selon l'une quelconque des revendications précédentes, dans laquelle lesdits chemins sont des chemins de commutation d'étiquette, ou LSPs.

14. Système pour la survie d'un réseau optique face à des défaillances multiples, comprenant :
- des moyens de détection pour détecter une défaillance dans un chemin de travail reliant un noeud d'origine à un noeud de destination ;
- des moyens de traitement pour, suivant un schéma de restauration, computer en avance, ou précalculer, des chemins de récupération pour récupérer des chemins de travail défaillants ;
- des moyens de commande, connectés auxdits moyens de détection et auxdits moyens de traitement, pour construire un chemin de récupération après la détection d'une défaillance de chemin de travail ;
dans lequel ledit système est **caractérisé en ce que** lesdits moyens de traitement sont disposés pour précalculer un ensemble de chemins de récupération pour chaque chemin de travail et **en ce que** lesdits moyens de commande sont disposés pour utiliser simultanément les chemins de récupération dudit ensemble de chemins de récupération pour essayer d'établir des communications entre ledit noeud d'origine et ledit noeud de destination, dans le cas où au moins une défaillance s'est produite dans chacun desdits chemins de travail.

15. Système selon la revendication 14, dans lequel lesdits moyens de traitement sont inclus dans un module de computation multichemin (101) et lesdits moyens de détection et de commande sont inclus dans un module de commande de capacité de survie de noeud optique (105), lesdits modules étant bidirectionnellement en communication entre eux à travers des sous-modules de communication correspondants (102, 106), et étant inclus ou associés audit noeud d'origine.

16. Système selon la revendication 15, dans lequel lesdits moyens de commande sont prévus pour requérir auxdits moyens de traitement, à travers lesdits sous-modules de communication (102, 106), des chemins de récupération pour un chemin de travail, lesdits moyens de traitement étant prévus pour envoyer, également à travers lesdits sous-modules de communication (102, 106), ledit ensemble de chemins de récupération aux moyens de commande après réception de ladite requête.

17. Système selon la revendication 16, dans lequel ledit module de commande de capacité de survie de noeud optique (105) comprend un sous-module de mémoire de chemin de récupération (107), en communication avec ledit sous-module de communications (106) pour au moins recevoir et stocker ledit ensemble de chemins de récupération, et avec lesdits moyens de commande pour au moins recevoir et stocker des données de réglage calculées par ce dernier par rapport à chacun des chemins de récupération, afin de les construire.

18. Système selon la revendication 17, dans lequel ledit module de commande de capacité de survie de noeud optique (105) comprend également un sous-module de signalement (110) en communication avec les moyens de commande pour envoyer à travers les chemins de récupération des messages de récupération de requête correspondants au noeud de destination et pour recevoir au moins un message de récupération de réponse à partir de là.

19. Système selon la revendication 18, comprenant des deuxièmes moyens de traitement inclus ou associés audit noeud de destination pour traiter les messages de récupération de requête reçus et renvoyer ledit message de récupération de réponse vers le noeud d'origine à travers l'un desdits chemins de récupération.

20. Système selon la revendication 19, dans lequel il met en oeuvre le procédé selon l'une quelconque des revendications 1 à 13.
